# EUROPÄISCHE PATENTSCHRIFT

(11) **EP 3 071 386 B1**
(45) Veröffentlichungstag und Bekanntmachung des Hinweises auf die Patenterteilung: **03.04.2019**
(21) Anmeldenummer: 14793845.0
(22) Anmeldetag: 05.11.2014
(51) Int. Cl.: B29C 41/18, B29C 41/38

(54) **FORMVORRICHTUNG ZUR HERSTELLUNG VON FORMTEILEN DURCH ROTATIONSFORMEN**
MOLD DEVICE FOR MANUFACTURING PARTS BY SLUSH-MOLDING
DISPOSITIF POUR PRODUIRE DES PIÈCES MOULÉES PAR EMBOUAGE

(30) Priorität: 21.11.2013 DE 102013112865
(43) Veröffentlichungstag der Anmeldung: 28.09.2016
(73) Patentinhaber: International Automotive Components Group GmbH, 40472 Düsseldorf (DE)
(72) Erfinder: BERGERS, Helmut, 47929 Grefrath (DE); KNEER, Aron, 76131 Karlsruhe (DE)
(74) Vertreter: Liesegang, Eva
(86) Internationale Anmeldenummer: PCT/EP2014/073753
(87) Internationale Veröffentlichungsnummer: WO 2015/074868

(56) Entgegenhaltungen:
- JP-A- H06 210 646
- JP-A- 2003 170 433

## Beschreibung

### GEBIET DER ERFINDUNG

Die Erfindung betrifft eine Formvorrichtung zur Herstellung von Formteilen durch Rotationsformen. Die Formteile finden zum Beispiel Anwendung in der Automobilindustrie als Slush-Häute oder andere Formhäute aus Kunststoff zur Beschichtung von Innenverkleidungsteilen in Kraftfahrzeugen.

### HINTERGRUND DER ERFINDUNG

Formhäute aus Kunststoff werden im Stand der Technik zum Beispiel in Rotationssinteranlagen hergestellt. Solche Anlagen umfassen in der Regel eine Formschale, einen Rahmen zur Fixierung der Formschale, eine Heizeinrichtung, eine Kühleinrichtung und eine Einrichtung zur Handhabung und zum Transport. Die Formschale ist häufig durch Galvanoformen aus Nickel hergestellt. Sie weist einen Produktbereich auf, der die Struktur des Formteils bestimmt, sowie einen Flanschbereich, mit dem sie in dem Rahmen fixiert ist. Mit Hilfe des Rahmens kann sie in einem Rotationswerkzeug gehalten oder zwischen Heizeinrichtung, Rotationswerkzeug und/oder Kühleinrichtung transportiert werden. Zur Herstellung der Formhäute wird die Formschale aufgeheizt und anschließend wird ein Pulverkasten auf die Formschale aufgesetzt. Der Pulverkasten enthält ein Kunststoffpulver, insbesondere eines aus thermoplastischen Elastomeren, zum Beispiel auf Urethanbasis, ein PVC oder dergleichen. Die Formschale und der Pulverkasten werden gemeinsam gedreht, so dass sich das Pulver auf der erhitzen Formoberfläche niederschlägt, um eine Folie oder Haut zu bilden. Dabei schmilzt das Pulver und die Rückseite der Haut gelifiziert und homogenisiert, sodass eine gleichmäßig dicke Kunststoffhaut mit einer geschlossenen Oberfläche erhalten wird. Wenn die Haut die gewünschte Dicke hat, wird die Form im den Werkzeug so ausgerichtet, dass überschüssiges Pulver in den Pulverkasten zurückfällt, und der Pulverkasten wird von der Form abgenommen. Anschließend wird die Formschale mit der Haut darin von ihrer Rückseite her gekühlt, beispielsweise durch Zuführen kalter Luft oder Besprühen mit Wasser, bevor die Haut entnommen werden kann.

Derartige Formvorrichtungen sind zum Beispiel in der DE 103 27 630 B3 und in der DE 10 2011 112 805 B3 beschrieben.

Durch die Heiz- und Kühlzyklen kommt es in der Formschale zu Spannungen, die dazu führen können, dass sich Risse bilden. Diese Risse entstehen insbesondere im Bereich verwinkelter Strukturen, Kanten und Sicken, die durch die gewünschte Struktur der Formhaut, beispielsweise für eine Instrumententafel, vorgegeben werden. In diesen verwinkelten Bereichen kann die Temperatur abweichen von der Solltemperatur der Formschale; denn die Formschale wird sich in den schlechter zugänglichen Bereichen weniger schnell aufheizen als in flächigen Bereichen. Desweitern entstehen Spannungen dadurch, dass eine thermische Ausdehnung des Materials der Formschale in einem flächigen Bereich durch eine angrenzende verwinkelte Struktur blockiert werden kann. Auch können Spannungen freigesetzt werden, die im Herstellungsprozess der Formschale "eingefroren" wurden. Grundsätzlich ist also zu erwarten, dass die thermische Ausdehnung des Formschalenmaterials im Bereich der verwinkelten Strukturen abweicht von der thermischen Ausdehnung in anderen Teilen der Formschale. Dadurch kann es zu thermischen Spannungen und letztendlich zu Rissbildung kommen.

Die DE 10 2011 112 805 B3 beschreibt das Problem, das sich im Bereich von Verwinkelungen bzw. Kanten der Formschale Temperaturgradienten bilden und daher die Formhaut nicht in allen Bereichen die gewünschte Dicke hat. Als Gegenmaßnahme wird vorgeschlagen, die Formschale in unterschiedlichen Bereichen unterschiedlich stark zu heizen oder zu kühlen. Die DE 10 2011 112 805 B3 beschreibt des Weiteren, dass zur gezielten Ausbildung von Formhäuten mit lokal unterschiedlicher Schichtdicke, eine Kühlstruktur in der Formschale ausgebildet werden kann. Diese Kühlstruktur umfasst poröse Strukturen in Teilen des Produktbereichs der Formschale, in die ein Kühlmedium eingebracht wird. Das Problem von Temperaturspannungen und Rissbildung aufgrund von Temperaturspannungen in der Formschale wird in dieser Schrift nicht angesprochen und mit den dort vorgeschlagenen Maßnahmen nicht gelöst.

Die JP-2003170433 A offenbart die Vermeidung von Spannungen in einer Form durch Einbringen von Entlastungsfalten im unteren Teil des Übergangsbereiches. Die JP-H06210646 A befasst sich mit dem Problem der Rissbildung in einer Formvorrichtung zur Herstellung von Formhäuten aufgrund von Temperaturspannungen. In dieser Schrift wird vorgeschlagen, in den Bereichen der Formschale, in denen die Temperaturspannungen am größten sind, also in der Nähe von Kanten und Sicken, einen Schlitz oder mehrere Schlitze auszubilden. Da die Schlitze im Produktbereich der Formschale liegen, werden sie mit Kunststoffstopfen gefüllt und mit Plattenbauteilen abgeschirmt. Die in der JP-H06210646 A beschriebene Formvorrichtung hat sich in der Praxis nicht bewährt und ist auf dem Markt nicht zu finden.

Die JP-20031704 A und JP-H062100646 A offenbaren den Oberbegriff der Ansprüche 1, 5 und 6.

Es ist eine Aufgabe der Erfindung, eine Formvorrichtung zur Herstellung von Formteilen durch Rotationsfonnen anzugeben, die Schäden an der Form durch thermische Spannungen verhindern oder jedenfalls reduzieren kann.

### ABRISS DER ERFINDUNG

Diese Aufgabe wird durch eine Formvorrichtung gemäß Patentanspruch 1, 5 und 6 gelöst. Ausgestaltungen der Erfindung sind in den abhängigen Ansprüchen angegeben.

Es wird eine Formvorrichtung zur Herstellung von Formteilen durch Rotationsformen vorgeschlagen. Die Formvorrichtung umfasst eine Formschale, die einen Produktbereich zur Formung des Formteils, einen außerhalb des Produktbereichs liegenden Flansch zur Fixierung der Formschale an einem Rahmen und einen Übergangsbereich zwischen dem Produktbereich und dem Flanschbereich aufweist. In dem Übergangsbereich sind mehrere Entlastungsschlitze um den Umfang des Produktbereichs verteilt angeordnet sein können.

Überraschenderweise hat sich gezeigt, dass es zum Abbau thermischer Spannungen in der Formschale nicht notwendig ist, Entlastungsschlitze im Produktbereich der Formschale oder gar in der Nähe der Stellen, wo besonders hohe thermische Spannungen auftreten, vorzusehen. Zum Abbau thermischer Spannungen ist es ausreichend, mehrere Entlastungsschlitze außerhalb des Produktbereichs, in einem Übergangsbereich zwischen Produktbereich und Flanschbereich vorzusehen. Der Produktbereich kann dadurch vollständig frei von Entlastungsschlitzen oder anderen Maßnahmen zum Abbau thermischer Spannungen bleiben, so dass die Fläche der Formschalung, die tatsächlich zur Formung benötigt wird, unversehrt bleiben kann. Eine Abdichtung oder ein anderer Schutz der Entlastungsschlitze ist nicht notwendig, kann aber optional vorgesehen werden.

Praktische Versuche haben ergeben, dass das Vorsehen der Entlastungsschlitze in dem Übergangsbereich, je nach Anzahl und Anordnung der Schlitze, bessere Ergebnisse erzielen als bekannte Entlastungsmaßnahmen. Naturgemäß wird die Formschale dort, wo die Entlastungsschlitze vorgesehen werden, geschwächt. Sollte es im Bereich der Entlastungsschlitze zu einem Reißen der Form kommen, so kann die Form in diesem Bereich leicht durch Schweißen repariert werden, weil die Entlastungsschlitze eben gerade nicht im Produktbereich liegen und eine Schweißnaht daher die Qualität des Formteils nicht beeinträchtigen wird.

Ein weiterer überraschender Effekt, des sich durch die Schlitze in dem Übergangsbereich der Formschale ergibt, ist, dass durch die Schlitze die Schwingungseigenschaften der Form eingestellt werden können. Die Schlitze verringern die Masse der Formschale im Vergleich zu einer Form ohne Schlitze. Durch Verringern der Masse kann die Eigenfrequenz der Form reduziert werden. In der Praxis hat sich gezeigt, dass durch eine Anregung der Form zur Verteilung des Pulvers auf der Formoberfläche die Form in Schwingung versetzt werden kann, wobei es geschehen kann, dass die Eigenfrequenz der Form bei oder in der Nähe der Anregungsfrequenz liegt. Dies führt zu hohen mechanischen Belastungen. Durch Verschieben der Eigenfrequenz weg von der Anregungsfrequenz kann die Lebensdauer der Form erhöht werden. Dieser Effekt kann bei der Dimensionierung und Anordnung der Schlitze berücksichtigt werden.

In einer Ausgestaltung erstrecken sich mehrere Entlastungsschlitze senkrecht oder ungefähr senkrecht zu einer Umrisslinie des Produktbereichs, wobei in dem Produktbereich selbst keine Entlastungsschlitze vorgesehen sind.

In einer Ausgestaltung kann der Produktbereich an sich abgegrenzt werden durch eine Abdichtfläche, die zwischen dem Produktbereich und dem Übergangsbereich liegt und zum Aufsetzen eines Pulverkastens dient. Der Übergangsbereich wiederum ist zu dieser Abdichtfläche abgewinkelt, um die Verbindung zu dem Flanschbereich herzustellen, so dass die Formschale in den Rahmen eingespannt werden kann. Dieser Übergangsbereich, in dem der oder die Entlastungsschlitze ausgebildet sind, kann zur Abdichtfläche senkrecht oder ungefähr senkrecht stehen, er kann zur Abdichtfläche auch schräg stehen, so dass zwischen Abdichtfläche und Übergangsbereich ein Winkel von zum Beispiel 90° bis 135° oder 90° bis 120° gebildet wird. Bei entsprechender Ausgestaltung des Rahmens ist es auch denkbar, dass der Übergangsbereich mit der Abdichtfläche im Wesentlichen in einer Ebene liegt oder mit einem geringeren Winkel zu dieser geneigt ist. Es ist auch möglich, dass der Pulverkasten nicht direkt auf die Formschale, sondern auf den Rahmen aufgesetzt wird, wobei dann der Übergangsbereich an den Produktbereich direkt angrenzen kann.

In einer Ausgestaltung sind nicht nur in dem Produktbereich sondern auch in der Abdichtfläche keine Entlastungsschlitze vorgesehen. Es kann auch vorgesehen sein, dass sich Entlastungsschlitze in die Abdichtfläche hinein bis zu einer Abdichtkontur erstrecken, wobei die Abdichtkontur diejenige ist, auf die ein Pulverkasten aufgesetzt wird, und somit der Kontur des Pulverkastens entspricht.

In einer Ausgestaltung sind Entlastungsschlitze nur in dem Übergangsbereich ausgebildet. In einer anderen Ausgestaltung erstrecken sich Entlastungsschlitze auch teilweise in den Flanschbereich oder sogar bis zum Außenrand des Flanschbereichs. Die Formschale ist stabiler, wenn die Entlastungsschlitze sich nicht oder nur teilweise in den Flanschbereich erstrecken und der Außenrand des Flanschbereichs durchgehend bleibt, die Erfindung ist hierauf jedoch nicht festgelegt.

In einer Ausgestaltung erstrecken sich ein oder mehrere Entlastungsschlitze von der Abdichtkontur bis zu einer Grenzlinie zwischen Übergangsbereich und Flanschbereich.

Die Entlastungsschlitze können grundsätzlich rechteckig sein, sie können abgerundete Ecken haben oder sie können an einer oder beiden Enden U-förmig sein. Es ist auch möglich, dass die Entlastungsschlitze an ihren Enden eine Querschnittserweiterung aufweisen, zum Beispiel in Form eines Tropfens, eines Ovals oder einer anderen abgerundeten Form.

Es ist möglich, wenn auch nicht notwendig, die Entlastungsschlitze mit einem Kunststoffmaterial zu füllen, insbesondere mit einem Silikonmaterial. Dies kann so realisiert sein, dass mehrere Entlastungsschlitze durch eine durchgehende Kunststoffhaut abgedeckt und gefüllt sind.

Die Entlastungsschlitze können zum Beispiel eine Breite von 0,5 mm bis 10 mm haben, spezieller von zum Beispiel 2 mm bis 5 mm.

Grundsätzlich können die Entlastungsschlitze vollständig durch das Material der Formschale hindurchgehen, also dieses durchtrennen, oder nur teilweise in das Material der Formschale eindringen, wobei zu erwarten ist, dass durchgehende Entlastungsschlitze einen besseren Spannungsabbau bewirken. Entlastungsschlitze, die das Material der Formschale nach Art von Nuten nur teilweise durchdringen, haben den Vorteil, dass die Formschale an sich stabiler ist und keine Fremdkörper von außen in den Formraum eindringen können. In einer Ausgestaltung beträgt die Restwandstärke der Entlastungsschlitze dann etwa 5 % bis 15 %, spezieller ungefähr 10 % der mittleren Wandstärke der Formschale.

In einer Ausgestaltung der Erfindung ist die Formschale durch Galvanoformen hergestellt, zum Beispiel aus Nickel. Die Entlastungsschlitze können in dem Galvanoformungs-Prozess mitausgebildet werden. Alternativ können sie auch durch Fräsen oder einen anderen Bearbeitungsprozess hergestellt werden.

### KURZE BESCHREIBUNG DER ZEICHNUNGEN

Die Erfindung ist im Folgenden anhand von Ausführungsbeispielen mit Bezug auf die Zeichnungen beschrieben. In den Figuren zeigen:
- Figur 1A: eine schematische perspektivische Darstellung einer Formvorrichtung gemäß dem Stand der Technik;
- Figur 1B: eine schematische perspektivische Darstellung der Formvorrichtung der Figur 1 aus einem anderen Blickwinkel, wobei zwei Bereiche angedeutet sind, in denen thermische Spannungen auftreten können;
- Figur 2: eine schematische Darstellung einer Formschale gemäß einem Beispiel der Erfindung in Draufsicht;
- Figur 3: eine perspektivische Darstellung der Formschale der Fig. 2;
- Figur 4: eine perspektivische Darstellung der Formschale gemäß einem anderen Beispiel;
- Figuren 5A und 5B: schematische Schnittdarstellungen durch die Formschale zur Erläuterung möglicher Ausbildungen der Entlastungsschlitze, entlang der Linie V-V in Figur 3;
- Figur 6: eine schematische Schnittdarstellung durch die Formschale im Bereich eines Entlastungsschlitzes;
- Figuren 7A, 7B und 7C: schematische Darstellungen zur Erläuterung möglicher Formen der Entlastungsschlitze, in Blickrichtung des Pfeiles VII in Figur 3; und
- Figuren 8A und 8B: zwei unterschiedliche Schnittdarstellungen durch die Formschale mit aufgesetztem Pulverkasten.

### DETAILLIERTE BESCHREIBUNG

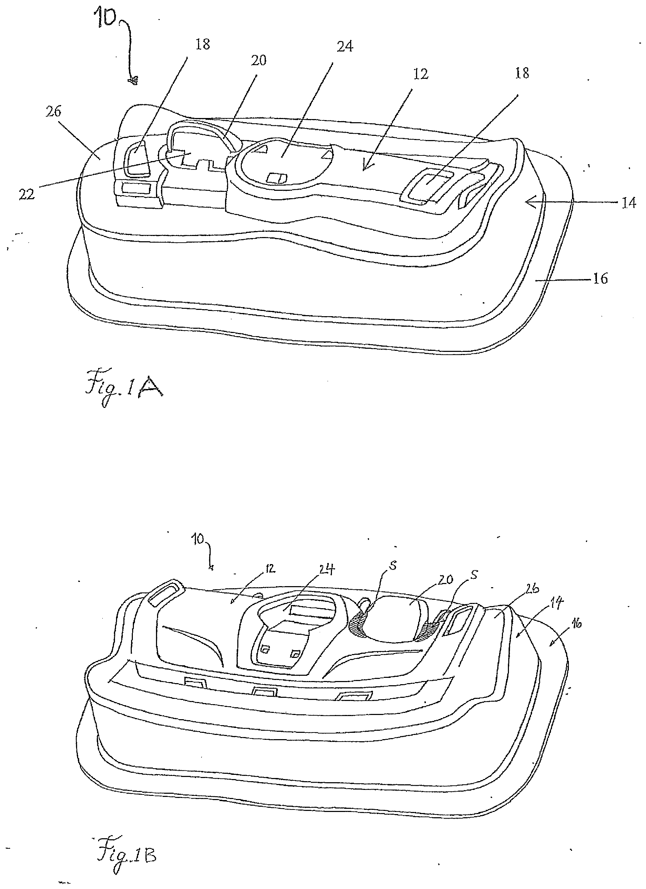

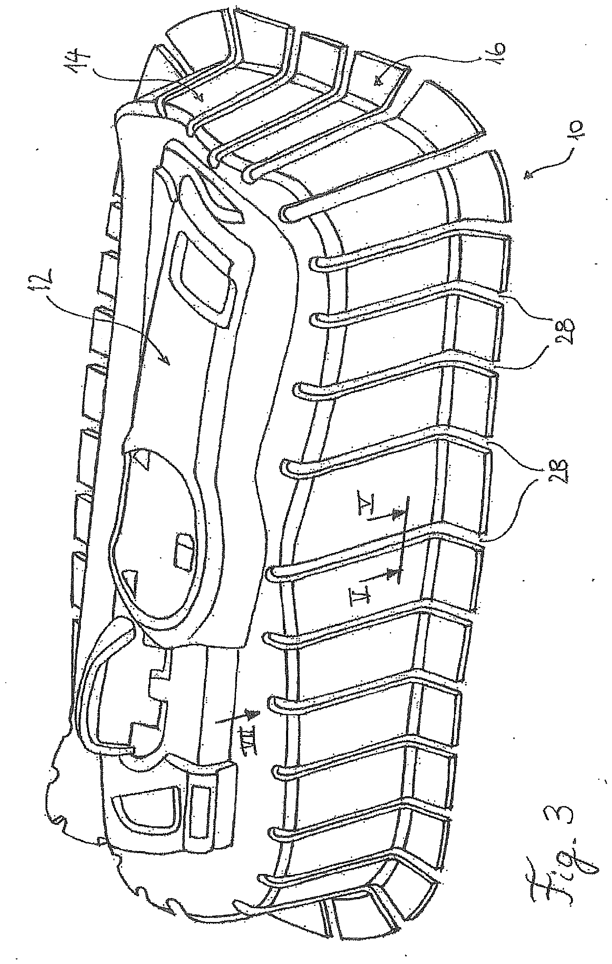

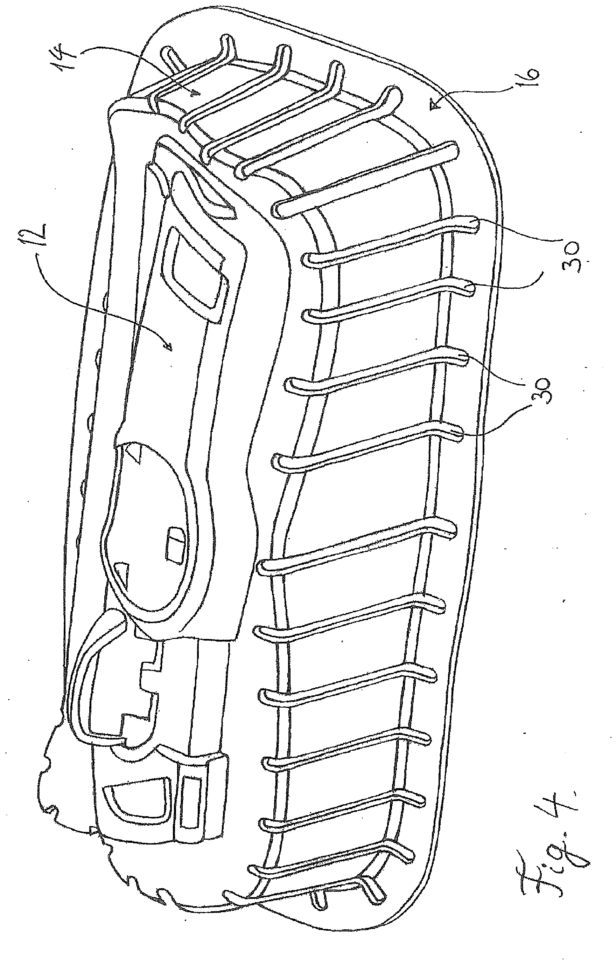

Figuren 1A und 1B zeigen vereinfacht in perspektivischen Darstellungen, in Blickrichtung von vorne und von hinten, eine Formschale zur Herstellung einer Slush-Haut für eine Instrumententafel gemäß dem Stand der Technik. Die Formschale ist beispielsweise durch Galvanoformung aus Nickel hergestellt. Die Formschale 10 gliedert sich in einen Produktbereich 12, einen Übergangsbereich 14 und einen Flanschbereich 16. Wie in den Figuren 3 und 4 besser zu erkennen ist, dient der Übergangsbereich 14 unter anderem dazu, einen Höhenausgleich zwischen dem Produktbereich 12 und dem Flanschbereich 16 herzustellen, so dass die Formschale 10 derart in einen Rahmen (nicht gezeigt) und somit in ein Formwerkzeug eingespannt werden kann, dass der Produktbereich wenigstens ungefähr horizontal/parallel zu dem Rahmen ausgerichtet ist. In dem Produktbereich 12 sind Strukturen zur Ausformung verschiedener Funktionsbereiche der Slush-Haut vorgesehen. In dem gezeigten Beispiel, in dem die Slush-Haut für eine Instrumententafel bestimmt ist, gibt es zum Beispiel eine Struktur für eine Lüftungsöffnung 18, eine Struktur für eine Hutze 20, eine Struktur für einen Bereich zur Aufnahme von Anzeigegeräten 22 und eine Struktur für Radio- oder Lautsprechersysteme 24.

Der Produktbereich 12 wird durch eine Abdichtfläche 26 eingegrenzt, die zwischen dem Produktbereich 12 und dem Übergangsbereich 14 liegt und dazu dient, einen Pulverkasten (nicht gezeigt) aufzusetzen und gegen die Formschale 10 abzudichten.

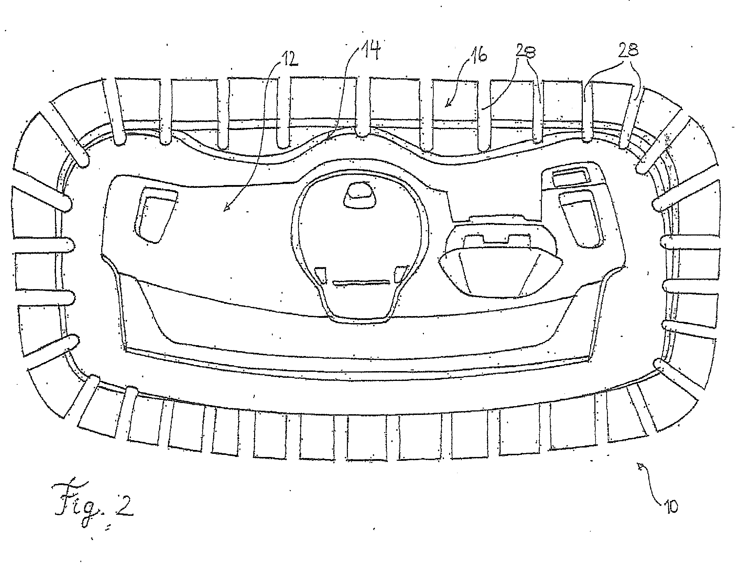

In Figur 1B sind zwei Bereiche S angedeutet, in denen es aufgrund von Heiz- und Kühlzyklen zu besonders hohen Spannungen kommen kann. Wie oben erläutert, treten solche Spannungen insbesondere im Bereich von stark abgewinkelten Strukturen beispielsweise am Rande des Hutzenbereichs 20 auf. Andere kritische Bereiche sind z.B. dort, wo eine relativ lange gerade Fläche an eine stark verwinkelte Struktur stößt. Die gerade Fläche kann sich nämlich während eines Heizzyklus ausdehnen, wobei diese Ausdehnung durch die gewinkelte Struktur behindert wird, so dass sich Spannungen aufbauen. Diese Spannungen können zu Spannungsrissen in der Formschale 10 führen. Zur Vermeidung solcher Spannungsrisse sieht die Erfindung vor, in dem Übergangsbereich 14 der Formschale einen oder mehrere Entlastungsschlitze auszubilden, wie im Folgenden mit Bezug auf die Figuren 2 bis 8 beschrieben ist.

Im Folgenden sind einige Beispiele der erfindungsgemäßen Formvorrichtung mit Bezug auf die Figur 2 bis 8 beschrieben, wobei man verstehen wird, dass die Erfindung weder auf die gezeigte Struktur der Formschale noch auf die dargestellte Anzahl, Anordnung und Ausgestaltung der Entlastungsschlitze begrenzt ist. Vielmehr dienen die Figuren und die folgende Beschreibung lediglich als beispielhafte Erläuterung der Grundsätze der Erfindung.

Figuren 2 und 3 zeigen ein Beispiel einer Formschale zur Verwendung in der Erfindung in Draufsicht und in perspektivischer Seitenansicht. Die Formschale 10 weist einen Produktbereich 12, einen Übergangsbereich 14 und einen Flanschbereich 16 auf. Der Produktbereich 12 umfasst verschiedene Strukturen zur Ausbildung der Slush-Haut, die beispielhaft mit Bezug auf Figur 1 beschrieben sind. Auf die Beschreibung von Figur 1 wird insofern Bezug genommen.

Die Formschale 10 kann eine z. B. durch Galvanoformen aus Nickel hergestellte Form mit einer Wandstärke von ungefähr 3 mm bis 4 mm sein. Die Oberfläche der Formschale 10 kann glatt, genarbt oder anders strukturiert sein, um der Formhaut eine entsprechende Oberflächenstruktur zu verleihen.

In dem Beispiel der Figur 2 sind in dem Übergangsbereich 14 Entlastungsschlitze 28 ausgebildet, die sich ungefähr senkrecht zur Kontur des Produktbereichs 12 im Wesentlichen durch den gesamten Übergangsbereich 14 und den angrenzenden Flanschbereich 16 erstrecken. Die Entlastungsschlitze 28 liegen außerhalb der Kontur, auf die der Pulverkasten aufgesetzt wird (nicht gezeigt), und erstrecken sich nicht bis in den Produktbereich 12. Die Entlastungsschlitze 28 haben eine Breite in der Größenordnung von etwa 0,5 mm bis 10 mm und speziell davon 2 mm bis 5 mm. Beispielsweise sind die Entlastungsschlitze 28 ungefähr 1 mm, 2 mm, 3 mm, 4 mm oder 5 mm breit. In dem in Figur 2 gezeigten Beispiel sind die Entlastungsschlitze 28 an ihren innenliegenden Enden abgerundet. Die Entlastungsschlitze können bei der Herstellung der Formschale durch Galvanoformen mit ausgebildet werden.

In dem in Figur 2 gezeigten Beispiel sind 34 Entlastungsschlitze 28 vorgesehen, die um den Umfang des Produktbereichs 12 ungefähr gleichmäßig angeordnet sind. Es ist möglich mehr oder weniger Entlastungsschlitze vorzusehen, Entlastungsschlitze nur auf einer Seite der Formschale 10 oder auf zwei gegenüberliegenden Seiten der Formschale 10 vorzusehen, Entlastungsschlitze nur an den Ecken oder nur an den geraden Seiten der Formschale 10 vorzusehen, je nach Größe und Gehalt der Formschale und den zu erwartenden Spannungen. Die Entlastungsschlitze 28 können sich grundsätzlich von der Abdichtkontur (nicht gezeigt) bis zum Außenrand des Flanschbereichs 16 erstrecken. Sie können auch kürzer sein.

Wie oben dargelegt, ist zu erwarten, dass thermische Spannungen insbesondere in solchen Teilen des Produktbereichs 12 auftreten, die verwinkelt sind oder wo eine relativ lange gerade Fläche an eine stark verwinkelte Struktur stößt. Die gerade Fläche kann sich nämlich während eines Heizzyklus ausdehnen, wobei diese Ausdehnung durch die gewinkelte Struktur behindert wird, so dass sich Spannungen aufbauen. Die Entlastungsschlitze 28 sollten so angeordnet und konzipiert sein, dass sie solche Spannungen ausgleichen, z. B. durch Anordnung der Entlastungsschlitze entlang langer gerader Flächen oder auf einer Seite, die einer langen geraden Fläche gegenüberliegt. Die konkrete Anordnung der Entlastungsschlitze kann empirisch oder durch Simulation ermittelt werden.

Durch die Entlastungsschlitze wird eine thermische Verformung der Foale ausgeglichen; dadurch können die in Figur 1B gezeigten Spannungen weitgehend kompensiert werden. Die Spannungen können jedenfalls auf ein solches Maß reduziert werden, dass die Gefahr der Bildung von Spannungsrissen gegen Null geht.

Figur 4 zeigt ein weiteres Beispiel einer Formschale zur Verwendung in der erfindungsgemäßen Formvorrichtung, wobei sich in diesem Beispiel die Entlastungsschlitze 30 nicht durch den gesamten Flanschbereich 16 erstrecken, sondern mit deutlichem Abstand zu dem Außenumfang des Flanschbereichs 16 enden. Im Übrigen ist die Formschale genauso ausgebildet wie in dem Beispiel der Figuren 2 und 3, so dass auf deren Beschreibung Bezug genommen wird. Entsprechende Teile sind mit denselben Bezugszeichen gekennzeichnet.

Da die Entlastungsschlitze 30 in dem Beispiel der Figur 4 deutlich vor dem Außenumfang des Flanschbereichs 16 enden, ist die Formschale 10 insgesamt formstabiler und auch das Einspannen der Formschale 10 in einem Rahmen ist einfacher. Versuche haben gezeigt, dass die Ausgleichswirkung der Entlastungsschlitze 30 der Figur 4 gleich oder nahezu gleich gut ist wie bei den Schlitzen 28 in der Ausgestaltung der Figuren 2 und 3. Obwohl also der Flanschbereich 16 und damit die Formschale 10 insgesamt stabiler sind, können die Entlastungsschlitze 30 in dem Übergangsbereich 14 thermische Verformungen der Formschale ausreichend kompensieren.

Auch in diesem Ausführungsbeispiel ist die Formschale 10 z. B. durch Galvanoformen aus Nickel mit einer Wandstärke von ungefähr 3 mm bis 4 mm ausgebildet. Die Oberfläche der Formschale 10 kann glatt, genarbt oder anders strukturiert sein, um der Formhaut eine entsprechende Oberflächenstruktur zu verleihen.

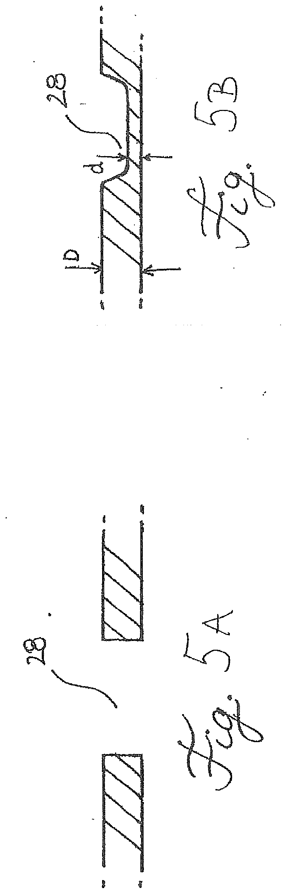

Die Figuren 5A und 5B zeigen Schnitte durch verschiedene Ausgestaltungen einer Formschale im Bereich eines Entlastungsschlitzes. Die Schnittrichtung ist in Figur 3 durch die Linie V-V angedeutet. Wie in Figur 5A gezeigt, können die Entlastungsschlitze 28 vollständig durch das Material der Formschale 10 hindurch gehen, also in Form von Durchgangsschlitzen ausgebildet sein. Wie in Figur 5B gezeigt, ist es auch möglich, dass die Entlastungsschlitze nach Art von Nuten nur in einen Teil des Materials der Formschale eindringen, wobei die Restwandstärke d der Formschale im Bereich des Entlastungsschlitzes 28 kleiner als 50 % der mittleren Wandstärke D der Formschale 10 sein sollte, d ≤ 0,5 D. In verschiedenen Ausführungsbeispielen beträgt die Restwandstärke d ungefähr 5% bis 15%, beispielsweise ungefähr 10% der mittleren Wandstärke D der Formschale. Die Formschale kann beispielsweise eine mittlere Wandstärke von 3 mm bis 4 mm haben, und die Entlastungsschlitze können eine Restwandstärke in der Größenordnung von beispielsweise 0,2 mm bis 0,4 mm haben. Während die Entlastungswirkung bei einer Restwandstärke d > 0 (Figur 5B) geringer ist als bei durchgehenden Entlastungsschlitzen (Figur 5A) haben Versuche gezeigt, dass bei korrekter Anordnung der Entlastungsschlitze gleichwohl ein zufriedenstellender Spannungsabbau erreicht werden kann. Die Ausgestaltung der Figur 5B hat den Vorteil, dass keine Probleme mit der Abdichtung der Formschale entstehen können. Die Entlastungsschlitze 28 werden vorzugsweise in dem Galvanoformungsprozess bei der Herstellung der Formschale 10 durch entsprechende Gestaltung der Schablone mit ausgebildet. Es ist aber auch möglich, die Entlastungsschlitze durch Fräsen oder ein anderes Bearbeitungsverfahren auszubilden.

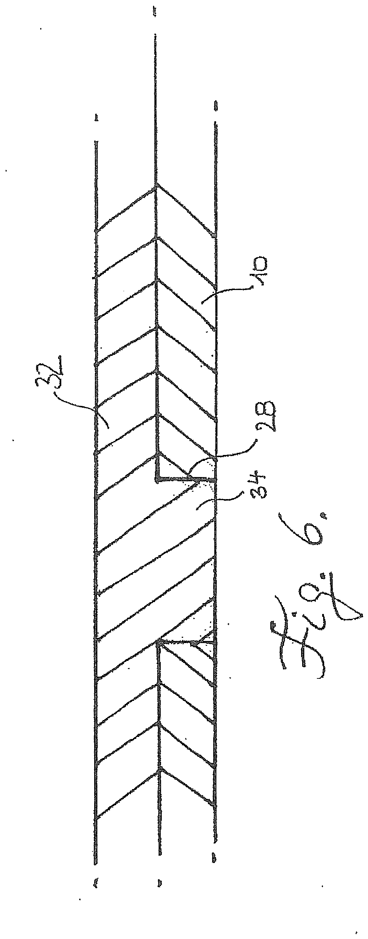

Figur 6 zeigt ein Beispiel zur Abdichtung eines Entlastungsschlitzes 28, der in der Formschale 10 ausgebildet ist. In diesem Beispiel ist eine Silikonhaut 32 auf der Oberfläche der Formschale 10, im Bereich der Entlastungsschlitze 28, ausgebildet, die auf die Rückseite der Formschale 10 (in den Figuren 3 und 4) von innen aufgebracht ist und im Bereich der Entlastungsschlitze 28 Dichtungsstege 34 bildet. Die Silikonhaut 32 kann beispielsweise durch Gießen auf die Rückseite der Formschale 10 aufgebracht werden. Sie kann eine Dicke in der Größenordnung von 1 bis 3 mm, z. B. ungefähr 2 mm haben. Silikon hat eine Temperaturbeständigkeit von ungefähr 150° bis 160° C. Da die Formschale im Produktbereich keine Schlitze aufweist und somit keine Dichtung benötigt, ist diese Temperaturbeständigkeit ausreichend. Es müssen keine Spezialmaterialien mit höherer Temperaturbeständigkeit verwendet werden. Obwohl die Entlastungsschlitze außerhalb des Produktbereichs 12 liegen, empfiehlt sich das Abdichten der Entlastungsschlitze, weil zum Kühlen der Formschale mit Wasser oder Luft ein geschlossener Raum, der die gesamte Formschale umfasst, von Vorteil ist.

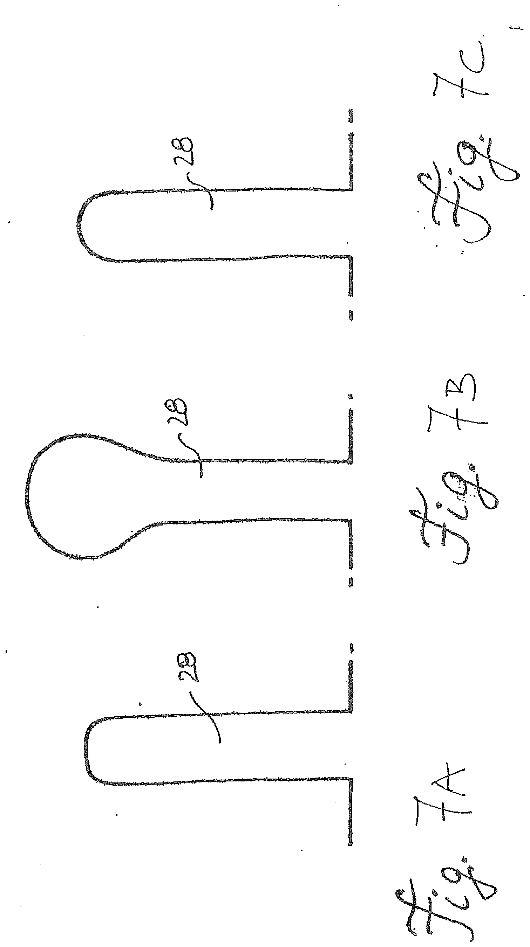

Die Figuren 7A, 7B und 7C zeigen schematisch verschiedene Möglichkeiten der Gestaltung des Endes der Entlastungsschlitze 28, wobei die Blickrichtung der Figuren 7A, 7B und 7C in Figur 3 durch den Pfeil VII angedeutet ist. Wie in den Figuren 7A, 7B und 7C gezeigt, können die Entlastungsschlitze 28 an einem oder an beiden Enden rechteckig oder rechteckig mit abgerundeten Ecken, tropfenförmig, U-förmig oder auf andere geeignete Weise gestaltet sein. Durch die Form der Enden der Entlastungsschlitze kann das Dehnungsverhalten der Formschale 10 im Bereich der Entlastungsschlitze gesteuert werden.

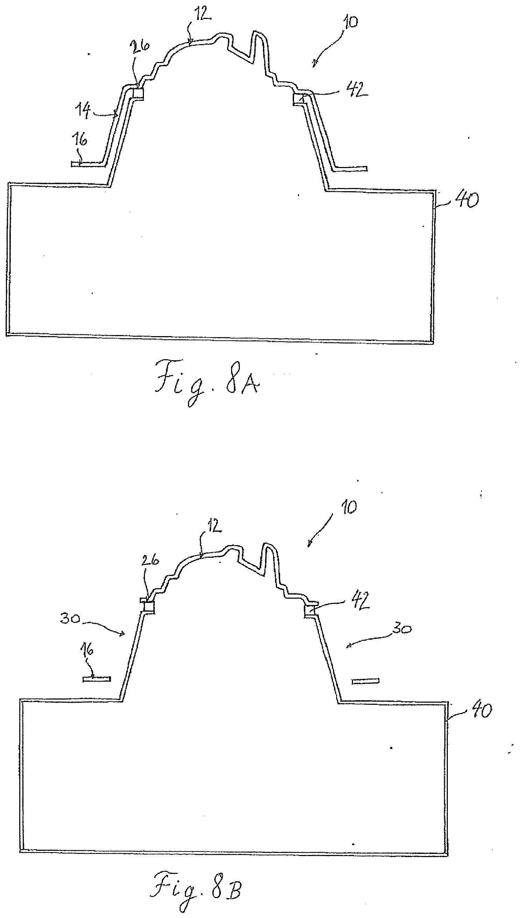

Figuren 8A und 8B zeigen Schnittdarstellungen durch eine Formschale 10 gemäß einer Ausgestaltung, mit aufgesetztem Pulverkasten 40. Der Pulverkasten 40 ist in den Figuren 8A und 8B zur Veranschaulichung der Erfindung nur schematisch dargestellt. Weder ist gezeigt, wie die Formschale in einem Rotationswerkzeug gehalten ist, noch wie Formschale 10 und Pulverkasten 40 verbunden sind. In der Regel wird jedenfalls eine umlaufende Dichtung 42 zwischen dem Pulverkasten 40 und der Formschale 10 vorgesehen sein.

In den Figuren 8A und 8B sind der Produktbereich 12, der Übergangsbereich 14 und der Flanschbereich 16 der Formschale zu erkennen, wobei in Figur 8B die Schnittebene durch zwei gegenüberliegende Entlastungsschlitze 30 verläuft, sodass der Übergangsbereich 14 in dieser Darstellung nicht zu sehen ist. Der Pulverkasten 40 sitzt mit der Dichtung 42 auf der Abdichtfläche 26 der Formschale 10 auf. Aus der Darstellung der Figur 8B ist zu erkennen, dass die Entlastungsschlitze 30 vollständig außerhalb des Produktbereichs 12 liegen und die Abdichtung zwischen Pulverkasten 40 und Formschale 10 nicht beinträchtigen.

Zur Herstellung einer Slush-Haut wird in der Praxis die Formschale 10 zunächst aufgeheizt z.B. mittels Infrarot-Heizung, Heißluft, elektrischer Heizung oder dergleichen. Die Formschale wird anschließend auf den Pulverkasten gesetzt, das im Pulverkasten befindliche Pulver lagert sich durch Schwenken oder Rotieren von Formschale und Pulverkasten auf der Oberfläche der Formschale ab. Dort schmilzt es aufgrund der in der Formschale 10 gespeicherten Wärme an und kann, optional unter weiterem Wärmeeintrag, auf der Oberfläche der Formschale vollständig aufschmelzen. Das Vorheizen, Aufbringen des Pulvers aus dem Pulverkasten und Nachheizen können nacheinander an verschiedenen Stationen oder an ein und derselben Station durchgeführt werden. Anschließend wird die Formschale 10 von dem Pulverkasten 40 getrennt und gekühlt, beispielsweise durch eine Sprühnebelkühlung mit Wasser, sodass die ausgeformte Kunststoffhaut entnommen werden kann. Ein Beispiel für ein Verfahren und eine Vorrichtung zur Herstellung solcher Kunststoffhäute ist in der EP 2 130 660 A1 beschrieben, ohne die Erfindung auf die dort beschriebene Anlage zu beschränken.

### BEZUGSZEICHENLISTE

- 10: Formschale
- 12: Produktbereich
- 14: Übergangsbereich
- 16: Flanschbereich
- 18: Lüftungsöffnung
- 20: Hutzenbereich
- 22: Instrumentenbereich
- 24: Radio- oder Lautsprecherbereich
- 26: Abdichtfläche
- 28: Entlastungsschlitze
- 30: Entlastungsschlitze
- 32: Silikonhaut
- 34: Dichtungssteg
- 40: Pulverkasten
- 42: Dichtung

## Patentansprüche

1. Formvorrichtung zur Herstellung von Formteilen durch Rotationsformen mit einer Formschale (10), die einen Produktbereich (12) zur Formung des Formteils, einen außerhalb des Produktbereichs (12) liegenden Flanschbereich (16) zur Fixierung der Formschale (10) an einem Rahmen und einen Übergangsbereich (14) zwischen dem Produktbereich (12) und dem Flanschbereich (16) aufweist, **dadurch gekennzeichnet, dass** in dem Übergangsbereich (14) mehrere Entlastungsschlitze (28; 30) um den Umfang des Produktbereichs (12) verteilt angeordnet sind, wobei die Entlastungsschlitze (28; 30) sich zu einer Umrisslinie des Produktbereichs (12) senkrecht oder ungefähr senkrecht erstrecken .

2. Formvorrichtung nach Anspruch 1, wobei Entlastungsschlitze (28; 30) nur in dem Übergangsbereich (14) ausgebildet sind.

3. Formvorrichtung nach Anspruch 1, wobei Entlastungsschlitze (30) sich von dem Übergangsbereich (14) teilweise in den Flanschbereich (16) erstrecken, wobei der Außenrand des Flanschbereiches (16) keine Entlastungsschlitze (28; 30) aufweist.

4. Formvorrichtung nach Anspruch 1, wobei der Produktbereich (12) abgegrenzt ist durch eine Abdichtfläche (26), die zwischen dem Produktbereich (12) und dem Übergangsbereich (14) liegt und zum Aufsetzen eines Pulverkastens eingerichtet ist, Entlastungsschlitze (30) sich von der Abdichtfläche bis zu einer Grenzlinie zwischen Übergangsbereich (14) und Flanschbereich (16) oder teilweise in den Flanschbereich (16) hinein erstrecken.

5. Formvorrichtung zur Herstellung von Formteilen durch Rotationsformen mit einer Formschale (10), die einen Produktbereich (12) zur Formung des Formteils, einen außerhalb des Produktbereichs (12) liegenden Flanschbereich (16) zur Fixierung der Formschale (10) an einem Rahmen und einen Übergangsbereich (14) zwischen dem Produktbereich (12) und dem Flanschbereich (16) aufweist, **dadurch gekennzeichnet, dass** in dem Übergangsbereich (14) mehrere Entlastungsschlitze (28; 30) um den Umfang des Produktbereichs (12) verteilt angeordnet sind, und wobei Entlastungsschlitze (30) sich von dem Übergangsbereich (14) teilweise in den Flanschbereich (16) erstrecken, wobei der Außenrand des Flanschbereiches (16) keine Entlastungsschlitze (28; 30) aufweist.

6. Formvorrichtung zur Herstellung von Formteilen durch Rotationsformen mit einer Formschale (10), die einen Produktbereich (12) zur Formung des Formteils, einen außerhalb des Produktbereichs (12) liegenden Flanschbereich (16) zur Fixierung der Formschale (10) an einem Rahmen und einen Übergangsbereich (14) zwischen dem Produktbereich (12) und dem Flanschbereich (16) aufweist, **dadurch gekennzeichnet, dass** in dem Übergangsbereich (14) mehrere Entlastungsschlitze (28; 30) um den Umfang des Produktbereichs (12) verteilt angeordnet sind,
wobei der Produktbereich (12) abgegrenzt ist durch eine Abdichtfläche (26), die zwischen dem Produktbereich (12) und dem Übergangsbereich (14) liegt und zum Aufsetzen eines Pulverkastens eingerichtet ist, wobei Entlastungsschlitze (30) sich von der Abdichtfläche bis zu einer Grenzlinie zwischen Übergangsbereich (14) und Flanschbereich (16) oder teilweise in den Flanschbereich (16) hinein erstrecken.

7. Formvorrichtung nach Anspruch 5 oder 6, wobei sich Entlastungsschlitze (28; 30) zu einer Umrisslinie des Produktbereichs (12) senkrecht oder ungefähr senkrecht erstrecken.

8. Formvorrichtung nach einem der vorangehenden Ansprüche, wobei in dem Produktbereich (12) keine Entlastungsschlitze (28; 30) vorgesehen sind.

9. Formvorrichtung nach einem der vorangehenden Ansprüche, wobei der Produktbereich (12) abgegrenzt ist durch eine Abdichtfläche (26), die zwischen dem Produktbereich (12) und dem Übergangsbereich (14) liegt und zum Aufsetzen eines Pulverkastens eingerichtet ist, wobei der Übergangsbereich (14) zu der Abdichtfläche (26) abgewinkelt ist, um die Formschale (10) zu bilden.

10. Formvorrichtung nach Anspruch 9, wobei in der Abdichtfläche (26) keine Entlastungsschlitze (28; 30) vorgesehen sind oder Entlastungsschlitze (28; 30) sich nur bis zu einer Abdichtkontur, die der Kontur des Pulverkastens entspricht, in die Abdichtfläche (26) erstrecken.

11. Formvorrichtung nach einem der vorangehenden Ansprüche, wobei Entlastungsschlitze (28; 30) zur Ebene des Produktbereichs (12) senkrecht oder ungefähr senkrecht stehen.

12. Formvorrichtung nach einem der vorangehenden Ansprüche, wobei wenigstens ein Ende eines Entlastungsschlitzes (28; 30) abgerundete Ecken, eine U-Form, oder eine Querschnittserweiterung aufweist, wobei die Querschnittserweiterung insbesondere rund, oval oder tropfenförmig sein kann.

13. Formvorrichtung nach einem der vorangehenden Ansprüche, wobei wenigstens ein Entlastungsschlitz (28; 30) mit einem Kunststoffmaterial (32), insbesondere einem Silikonmaterial gefüllt ist, wobei insbesondere mehrere Entlastungsschlitze (28; 30) durch eine im Bereich der Entlastungsschlitze (28; 30) durchgehende Kunststoffhaut (32) gefüllt sind.

14. Formvorrichtung nach einem der vorangehenden Ansprüche, wobei Entlastungsschlitze (28; 30) eine Breite von 0,5 mm bis 10 mm, insbesondere von 2 mm bis 5 mm haben.

15. Formvorrichtung nach einem der vorangehenden Ansprüche, wobei Entlastungsschlitze (28; 30) das Material der Formschale (10) vollständig oder teilweise durchtrennen, wobei insbesondere das Material der Formschale (10) im Bereich wenigstens eines der Entlastungsschlitze (28; 30) eine Restwandstärke von 5 % bis 15 %, spezieller von ungefähr 10 % der mittleren Wandstärke der Formschale (10) hat.

## Claims

1. A molding device for producing molded parts by means of rotation molding comprising a molding shell (10), which has a product region (12) for molding the molded part, a flange region (16) located outside of the product region (12), for fixing the molding shell (10) to a frame, and a transition region (14) between the product region (12) and the flange region (16), **characterized in that** a plurality of relief slots (28; 30) are arranged so as to be distributed around the circumference of the product region (12) in the transition region (14), wherein the relief slots (28; 30) extend perpendicular or approximately perpendicular to a contour line of the product region (12).

2. The molding device according to claim 1, wherein relief slots (28; 30) are embodied only in the transition region (14).

3. The molding device according to claim 1, wherein relief slots (30) extend from the transition region (14) partially into the flange region (16), wherein the outer edge of the flange region (16) does not have any relief slots (28; 30).

4. The molding device according to claim 1, wherein the product region (12) is delimited by a sealing surface (26), which lies between the product region (12) and the transition region (14) and is configured for attaching a powder box, relief slots (30) extend from the sealing surface all the way to a boundary line between transition region (14) and flange region (16) or partially into the flange region (16).

5. A molding device for producing molded parts by means of rotation molding comprising a molding shell (10), which has a product region (12) for molding the molded part, a flange region (16) located outside of the product region (12), for fixing the molding shell (10) to a frame, and a transition region (14) between the product region (12) and the flange region (16), **characterized in that** a plurality of relief slots (28; 30) are arranged so as to be distributed around the circumference of the product region (12) in the transition region (14), and wherein the relief slots (28; 30) extend from the transition region (14) partially into the flange region (16), wherein the outer edge of the flange region (16) does not have any relief slots (28; 30).

6. A molding device for producing molded parts by means of rotation molding comprising a molding shell (10), which has a product region (12) for molding the molded part, a flange region (16) located outside of the product region (12), for fixing the molding shell (10) to a frame, and a transition region (14) between the product region (12) and the flange region (16), **characterized in that** a plurality of relief slots (28; 30) are arranged so as to be distributed around the circumference of the product region (12) in the transition region (14),
wherein the product region (12) is delimited by a sealing surface (26), which lies between the product region (12) and the transition region (14) and is configured for attaching a powder box, wherein relief slots (30) extend from the sealing surface all the way to a boundary line between transition region (14) and flange region (16) or partially into the flange region (16).

7. The molding device according to claim 5 or 6, wherein relief slots (28; 30) extend perpendicular or approximately perpendicular to a contour line of the product region (12).

8. The molding device according to one of the preceding claims, wherein no relief slots (28; 30) are provided in the product region (12).

9. The molding device according to one of the preceding claims, wherein the product region (12) is delimited by a sealing surface (26), which lies between the product region (12) and the transition region (14) and is configured for attaching a powder box, wherein the transition region (14) is angled to the sealing surface (26) in order to form the molding shell (10).

10. The molding device according to claim 9, wherein no relief slots (28; 30) are provided in the sealing surface (26), or relief slots (28; 30) extend only up to a sealing contour, which corresponds to the contour of the powder box, into the sealing surface (26).

11. The molding device according to one of the preceding claims, wherein relief slots (28; 30) are perpendicular or approximately perpendicular to the plane of the product region (12).

12. The molding device according to one of the preceding claims, wherein at least one end of a relief slot (28; 30) has rounded corners, a U-shape, or a cross sectional expansion, wherein the cross sectional expansion can in particular be round, oval or drop-shaped.

13. The molding device according to one of the preceding claims, wherein at least one relief slot (28; 30) is filled with a plastic material (32), in particular a silicon material, wherein in particular a plurality of relief slots (28; 30) are filled by a plastic skin (32), which is continuous in the region of the relief slots (28; 30).

14. The molding device according to one of the preceding claims, wherein relief slots (28; 30) have a width of 0.5 mm to 10 mm, in particular of 2 mm to 5 mm.

15. The molding device according to one of the preceding claims, wherein relief slots (28; 30) completely or partially sever the material of the molding shell (10), wherein in particular the material of the molding shell (10) has a residual wall thickness of 5 % to 15 %, more specifically of approximately 10 % of the average wall thickness of the molding shell (10), in the region of at least one of the relief slots (28; 30).

## Revendications

1. Dispositif de moulage pour la fabrication de pièces moulées par moulage par rotation avec une coque de moulage (10) qui comprend une partie de produit (12) pour le moulage de la pièce moulée, une partie de bridage (16) se trouvant à l'extérieur de la partie de produit (12), pour la fixation de la coque de moulage (10) à un cadre et une partie de transition (14) entre la partie de produit (12) et la partie de bridage (16), **caractérisé en ce que**, dans la partie de transition (14), sont disposées de manière répartie sur la circonférence de la partie de produit (12), plusieurs fentes de décharge (28 ; 30), les fentes de décharge (28 ; 30) s'étendant perpendiculairement ou presque perpendiculairement à un contour de la partie de produit (12).

2. Dispositif de moulage selon la revendication 1, les fentes de décharge (28 ; 30) étant réalisées uniquement dans la partie de transition (14).

3. Dispositif de moulage selon la revendication 1, les fentes de décharge (30) s'étendant de la partie de transition (14) partiellement vers la partie de bridage (16), le bord externe de la partie de bridage (16) ne comprenant aucune fente de décharge (28 ; 30).

4. Dispositif de moulage selon la revendication 1, la partie de produit (12) étant délimitée par une surface d'étanchéité (26) qui se trouve entre la partie de produit (12) et la partie de transition (14) et étant conçue pour la pose d'une boîte à poudre, les fentes de décharge (30) s'étendant de la surface d'étanchéité jusqu'à une limite entre la partie de transition (14) et la partie de bridage (16) ou partiellement dans la partie de bridage (16).

5. Dispositif de moulage pour la fabrication de pièces moulées par moulage par rotation avec une coque de moulage (10) qui comprend une partie de produit (12) pour le moulage de la pièce moulée, une partie de bridage (16) se trouvant à l'extérieur de la partie de produit (12), pour la fixation de la coque de moulage (10) à un cadre et une partie de transition (14) entre la partie de produit (12) et la partie de bridage (16), **caractérisé en ce que**, dans la partie de transition (14), sont disposées de manière répartie sur la circonférence de la partie de produit (12), plusieurs fentes de décharge (28 ; 30) et les fentes de décharge (30) s'étendant de la partie de transition (14) partiellement dans la partie de bridage (16), le bord externe de la partie de bridage (16) ne comprenant aucune fente de décharge (28 ; 30).

6. Dispositif de moulage pour la fabrication de pièces moulées par moulage par rotation avec une coque de moulage (10) qui comprend une partie de produit (12) pour le moulage de la pièce moulée, une partie de bridage (16) se trouvant à l'extérieur de la partie de produit (12), pour la fixation de la coque de moulage (10) à un cadre et une partie de transition (14) entre la partie de produit (12) et la partie de bridage (16), **caractérisé en ce que**, dans la partie de transition (14), sont disposées de manière répartie sur la circonférence de la partie de produit (12), plusieurs fentes de décharge (28 ; 30), la partie de produit (12) étant délimitée par une surface d'étanchéité (26), qui se trouve entre la partie de produit (12) et la partie de transition (14) et étant conçue pour la pose d'une boîte à poudre, les fentes de décharge (30) s'étendant de la surface d'étanchéité jusqu'à une limite entre la partie de transition (14) et la partie de bridage (16) ou partiellement dans la partie de bridage (16).

7. Dispositif de moulage selon la revendication 5 ou 6, les fentes de décharge (28 ; 30) s'étendant perpendiculairement ou presque perpendiculairement à un contour de la partie de produit (12).

8. Dispositif de moulage selon l'une des revendications précédentes, aucune fente de décharge (28 ; 30) n'étant prévue dans la partie de produit (12).

9. Dispositif de moulage selon l'une des revendications précédentes, la partie de produit (12) étant délimitée par une surface d'étanchéité (26), qui se trouve entre la partie de produit (12) et la partie de transition (14) et étant conçue pour la pose d'une boîte à poudre, la partie de transition (14) étant pliée par rapport à la surface d'étanchéité (26) afin de former la coque de moulage (10).

10. Dispositif de moulage selon la revendication 9, aucune fente de décharge (28 ; 30) n'étant prévue dans la surface d'étanchéité (26) ou les fentes de décharge (28 ; 30) s'étendant dans la surface d'étanchéité (26) seulement jusqu'à un contour d'étanchéité qui correspond au contour de la boîte à poudre.

11. Dispositif de moulage selon l'une des revendications précédentes, les fentes de décharge (28 ; 30) s'étendant perpendiculairement ou presque perpendiculairement au plan de la partie de produit (12).

12. Dispositif de moulage selon l'une des revendications précédentes, au moins une extrémité d'une fente de décharge (28 ; 30) comprenant des angles arrondis, une forme en U ou un élargissement de section, l'élargissement de section pouvant plus particulièrement être rond, ovale ou en forme de goutte.

13. Dispositif de moulage selon l'une des revendications précédentes, au moins une fente de décharge (28 ; 30) étant remplie d'une matière plastique (32), plus particulièrement un matériau de type silicone, plus particulièrement plusieurs fentes de décharge (28 ; 30) étant remplies d'une peau en matière plastique (32) continue au niveau des fentes de décharge (28 ; 30).

14. Dispositif de moulage selon l'une des revendications précédentes, les fentes de décharge (28 ; 30) présentant une largeur de 0,5 mm à 10 mm, plus particulièrement de 2 mm à 5 mm.

15. Dispositif de moulage selon l'une des revendications précédentes, les fentes de décharge (28 ; 30) découpant entièrement ou partiellement le matériau de la coque de moulage (10), plus particulièrement le matériau de la coque de moulage (10) présentant, au niveau d'au moins une des fentes de décharge (28 ; 30) une épaisseur de parois résiduelle de 5 % à 15 %, plus particulièrement d'environ 10 % de l'épaisseur moyenne des parois de la coque de moulage (10).
